# EUROPÄISCHE PATENTSCHRIFT

(11) **EP 4 099 611 B1**
(45) Veröffentlichungstag und Bekanntmachung des Hinweises auf die Patenterteilung: **10.01.2024**
(21) Anmeldenummer: 21176992.2
(22) Anmeldetag: 31.05.2021
(51) Int. Cl.: H04L 9/08, G06F 7/58

(54) **ERZEUGUNG QUANTENSICHERER SCHLÜSSEL IN EINEM NETZWERK**
GENERATION OF QUANTUM SECURE KEYS IN A NETWORK
GÉNÉRATION DE LA CLÉ QUANTIQUE SÛRE DANS UN RÉSEAU

(43) Veröffentlichungstag der Anmeldung: 07.12.2022
(73) Patentinhaber: Deutsche Telekom AG, 53113 Bonn (DE)
(72) Erfinder: GEITZ, Marc, 58089 Hagen (DE); BRAUN, Ralf-Peter, 12305 Berlin (DE)
(74) Vertreter: Nern, Peter-Michael

(56) Entgegenhaltungen:
- EP-A1- 1 833 009
- WO-A1-2019/223979
- WO-A1-2021/090027
- US-A1- 2018 109 377

## Beschreibung

Die Erfindung betrifft eine Lösung zur Erzeugung quantensicherer Schlüssel, welche durch mindestens zwei Netzelemente eines Netzwerks als gemeinsame Schlüssel zur Sicherung der zwischen ihnen über das Netzwerk erfolgenden Kommunikation verwendet werden. Sie bezieht sich hierbei auf eine Lösung, bei welcher mehrere Netzwerkkomponenten an der Erzeugung der quantensicheren Schlüssel beteiligt sind, einschließlich solcher, die selbst nicht über quantenmechanische Mittel verfügen. Gegenstände der Erfindung sind ein entsprechendes Verfahren und ein zu dessen Durchführung ausgebildetes System.

Der Absicherung der Infrastruktur öffentlicher Netze und der über diese ausgetauschten Daten gegen potenzielle Angriffe und Manipulationen kommt eine auch weiterhin stark steigende Bedeutung zu. Ein wesentlicher Teil dieser Absicherung geschieht durch die Verschlüsselung der als Teil der Infrastruktur von Netzwerken anzusehenden, die Kommunikation und die Datenverkehre managenden Steuerdaten und der über die Netzwerke übertragenen Nutzdaten der Kommunikationsteilnehmer. Für die Verschlüsselung entsprechender Daten ist eine Vielzahl von Verschlüsselungsmechanismen bekannt geworden, welche sich im Wesentlichen in die Kategorie asymmetrische Verschlüsselung oder symmetrische Verschlüsselung unterteilen lassen.

Bei der asymmetrischen Verschlüsselung wird für die Verschlüsselung der Daten ein allen dazu berechtigten Kommunikationsteilnehmern bekannter öffentlicher Schlüssel verwendet, wohingegen zur späteren Entschlüsselung der solchermaßen verschlüsselten Daten ein privater Schlüssel eines die mit seinem öffentlichen Schlüssel verschlüsselten Daten empfangenden Teilnehmers, respektive einer Einrichtung, verwendet wird, welcher dort zuvor als Teil eines den öffentlichen und den privaten Schlüssel umfassenden Schlüsselpaares erzeugt wurde.

Deutlich sicherer als die asymmetrische Verschlüsselung sind symmetrische Verschlüsselungsverfahren, bei denen für die Verschlüsselung der Daten und für deren spätere Entschlüsselung jeweils derselbe geheime Schlüssel verwendet wird. Ein Problem der symmetrischen Verschlüsselung ist es jedoch, den vorgenannten geheimen Schlüssel an die zu seiner Benutzung berechtigten Einheiten und/oder Teilnehmer zu verteilen, ohne dass hierbei der geheime Schlüssel in die Hände unbefugter, respektive potenzieller Angreifer gelangt.

Neue Möglichkeiten für die Verteilung zur symmetrischen Verschlüsselung verwendbarer geheimer Schlüssel bietet insoweit die Quantenkryptografie. Diese macht es möglich, Schlüssel mit sehr hoher Entropie, das heißt tatsächlich zufälliger Art, zu generieren und diese angriffssicher an mehrere Teilnehmer und/oder Einrichtungen zu verteilen. Hierbei ermöglichen es Verfahren der Quantum Key Distribution (QKD) entsprechende Schlüssel hoher Entropie an zumindest zwei voneinander entfernten Orten gewissermaßen gleichzeitig bereitzustellen, und zwar in der Weise, dass jeder Versuch eines Angriffs auf derartige Schlüssel unmittelbar erkannt wird, also nicht verdeckt bleiben kann. Hierfür bedarf es jedoch eines Quantenkanals, das heißt eines Kanals zur Übertragung quantenmechanischer Zustände, zwischen den beteiligten Teilnehmern, respektive deren die Schlüssel verwendenden Einrichtungen.

Allerdings resultiert aus den für die Anwendung des QKD-Prinzips bestehenden Erfordernissen eine Reihe von Nachteilen für diese Technologie. So sind Systeme und Einrichtungen für den Einsatz der QKD-Technologie sehr teuer. Darüber hinaus ist die Reichweite der erforderlichen Quantenkanäle, jedenfalls soweit diese physisch durch typischerweise dafür in den Netzwerken verwendete Glasfasern realisiert werden, sehr begrenzt. Die mögliche Reichweite beträgt hierbei typischerweise zirka 100 km, allenfalls wenige 100 km, jedoch nach derzeitigem Stand nicht 1000 km oder mehr. Dies resultiert aus der Dämpfung, welche die über die Quantenkanäle (Lichtleitfasern) übertragenen quantenmechanischen Zustände unterworfen sind. Auf der anderen Seite ist prinzipbedingt ein Einsatz von Verstärkern innerhalb der Quantenkanäle nicht möglich, da die Verstärkung entsprechender quantenmechanische Zustände transportierender Signale deren Auslesen erforderlich macht, was unmittelbar zu einer Zerstörung dieser quantenmechanischen Zustände führen würde.

Insbesondere die mangelnde Reichweite erfordert spezielle Lösungen, um auch Netzelementen, welche aufgrund ihrer Entfernung voneinander direkt nicht über einen Quantenkanal verbunden sind, quantensichere Schlüssel, das heißt Schlüssel hoher Entropie, zur Verfügung stellen zu können. Eine Möglichkeit besteht dabei darin, die Schlüssel mit Hilfe einer über quantenmechanische Mittel verfügenden Einrichtung, wie beispielsweise eines Quantum Random Number Generator (QRNG), zu erzeugen und diese Schlüssel unter Einsatz ebenfalls als sehr sicher anzusehender Verschlüsselungsverfahren, beispielsweise nach dem Prinzip der Key-Encapsulation, an die sie für den späteren Einsatz benötigenden Netzelemente zu übermitteln.

Jedoch besteht hierbei das Risiko, dass ein entsprechender quantensicherer Schlüssel bei seiner über ein Netzwerk erfolgenden Übermittlung an ein für seinen Empfang bestimmtes Netzelement abgefangen werden könnte. Die Folge wäre, dass eine später unter Verwendung dieses Schlüssels erfolgende verschlüsselte Kommunikation, wie beispielsweise der verschlüsselte Austausch die Netzinfrastruktur betreffender Steuerdaten, auch nicht mehr sicher ist, wobei dies möglicherweise zudem durch die berechtigten Teilnehmer zunächst längere Zeit gar nicht bemerkt wird.

Die Patentanmeldung WO 2021/090027 offenbart ein Netzwerk mit einer quantenbasierten Sicherheitsebene in Zusammenhang mit einer Blockchain-unterstützten Datenübertragungsebene.

Die Patentanmeldung WO 2019/223979 offenbart die lokale Generierung von quantensicheren Schlüsseln in HSMs von Netzwerkelementen.

Die Patentanmeldung US 2018/109377 und das Patent EP 1833009 offenbaren technischen Hintergrund zur HSM-unterstützten Verteilung von quantensicheren Schlüsseln.

Aufgabe der Erfindung ist es, eine Lösung für die zuvor dargestellten Probleme bereitzustellen, welche außerdem die genannten Nachteile bereits bekannter Lösungen vermeidet. Hierfür sind ein Verfahren zur Erzeugung quantensicherer Schlüssel in einem Netzwerk anzugeben sowie ein zur Durchführung des Verfahrens geeignetes System bereitzustellen.

Die Aufgabe wird durch ein Verfahren mit den Merkmalen des Patentanspruchs 1 gelöst. Ein die Aufgabe lösendes, zur Durchführung des Verfahrens geeignetes

System ist durch den ersten Sachanspruch charakterisiert. Vorteilhafte Aus- und Weiterbildungen der Erfindung sind durch die Unteransprüche gegeben.

Das vorgeschlagene Verfahren dient, entsprechend der Aufgabe und wie bereits eingangs thematisiert, zur Erzeugung quantensicherer Schlüssel in einem Netzwerk. Es dient der Erzeugung quantensicherer Schlüssel, welche danach zur Sicherung der zwischen mindestens zwei Netzelementen in dem Netzwerk erfolgenden Kommunikation verwendet werden können, trotzdem die vorgenannten mindestens zwei Netzelemente selbst nicht über quantenmechanische Mittel verfügen.

Der nachfolgend beschriebene Ablauf wird korrespondierend mit den Patentansprüchen in Bezug auf die Erzeugung eines quantensicheren Schlüssels (Einzahl) dargestellt. In der Praxis haben die vorgenannten Netzelemente allerdings typischerweise einen ständigen Bedarf an quantensicheren Schlüsseln und somit einen Bedarf an einer Mehrzahl von Schlüsseln, wobei diesem Umstand bei der hier in der Einzahl erfolgenden Betrachtung insoweit Rechnung getragen wird, als berücksichtigt und entsprechend ausgeführt wird, dass der in diesem Zusammenhang angesprochenen, mithilfe quantentechnischer Mittel generierten Zufallszahl ein sie und später den letztlich erzeugten quantensicheren Schlüssel eindeutig bezeichnender Identifikator zugeordnet ist, durch welchen die Zufallszahl von gegebenenfalls mehreren anderen auf dieselbe Weise erzeugten und versendeten Zufallszahlen unterscheidbar ist.

Auch die Möglichkeit, dass die Zufallszahlen und die jeweils zugehörigen Identifikatoren den Netzelementen als Bestandteil eines Streams zur Verfügung gestellt und in den Netzelementen entsprechend einer dafür hinterlegten Vorschrift zunächst in einzelne Zufallszahlen und zugehörige Identifikatoren zerlegt sowie anschließend entsprechend dem Verfahren verarbeitet werden, soll insoweit von der Erfindung umfasst sein. Die nachfolgende Bezugnahme auf die Erzeugung eines (einzelnen) quantensicheren Schlüssels erfolgt insoweit ausschließlich zur sprachlichen Vereinfachung. Was die bereits mehrfach angesprochenen Netzelemente anbelangt so kann es sich bei Ihnen um komplexe technische Einrichtungen wie komplette Netzwerkknoten oder aber auch um einzelne Einrichtungen oder Geräte der Netzinfrastruktur eine Netzwerks handeln.

Gemäß dem Verfahren wird ein jeweiliger quantensicherer Schlüssel lokal durch jedes der mindestens zwei Netzelemente unter Verwendung eines Pre-shared Secret, nämlich eines an die Netzelemente zuvor verteilten gemeinsamen Geheimnisses, berechnet. Die Verteilung des vorgenannten Pre-shared Secret an die jeweiligen Netzelemente erfolgt dabei, indem dieses gemeinsame Geheimnis in einem Hardwaresicherheitsmodul (Hardware Security Modul - HSM) eines jeweiligen Netzelements - beispielsweise im Zusammenhang mit der Herstellung seiner Komponenten oder im Zusammenhang mit der Errichtung des Netzwerks unter Einbeziehung des jeweiligen Netzelementes - implementiert wird. Bei dem Pre-shared Secret handelt es sich um eine zufällig zusammengestellte Bitfolge, nämlich um eine zufällige Folge von Nullen und Einsen, welche so nur lokal in den in das Verfahren einbezogenen Netzelementen vorliegt.

Wie gesagt, handelt es sich bei dem Pre-shared Secret um ein gemeinsames Geheimnis, so dass die entsprechende Folge von Nullen und Einsen identisch in den das Verfahren nutzenden Netzelementen vorliegt, für welche die über das Netzwerk erfolgende Kommunikation mittels gemäß dem Verfahren erzeugter quantensicherer Schlüssel abgesichert werden soll. Mit einbezogen ist hierbei die Möglichkeit, dass es unterschiedliche Gruppen von Netzelementen geben kann, deren Netzelemente unabhängig von Netzelementen anderer Gruppen untereinander zu verwendende quantensichere Schlüssel erzeugen. Hierbei haben dann alle Netzelemente einer Gruppe ein gemeinsames Geheimnis, respektive dasselbe in ihrem jeweiligen HSM hinterlegte Pre-shared Secret, welches sich von dem im HSM der Netzelemente einer anderen Gruppe hinterlegten Pre-shared Secret unterscheidet.

Auch wenn zuvor im Hinblick auf das Pre-shared Secret von einer zufälligen Folge von Nullen und Einsen gesprochen wurde, so muss es sich bei dem Geheimnis und wird es sich bei diesem regelmäßig nicht um eine (restriktiv betrachtet) tatsächlich zufällige Zahl, aber vorzugsweise dennoch um eine Zahl relativ hoher Entropie handeln. Vielmehr wird gemäß dem vorgeschlagenen Verfahren den mindestens zwei, wie bereits ausgeführt, selbst nicht über quantenmechanische Mittel verfügenden Netzelementen zur Gewährleistung einer tatsächlich hohen Entropie der letztlich erzeugten Schlüssel, aufgrund welcher diese als quantensicher zu bezeichnen sind, von einer zentralen Entropiequelle eine Zufallszahl mit hoher Entropie zur Verfügung gestellt, mittels welcher die Netzelemente unter Verwendung des Pre-shared Secret jedes für sich lokal, aber in jeweils identischer Weise den letztlich zu erzeugenden gemeinsamen quantensicheren Schlüssel berechnen.

Für die Erzeugung eines jeweiligen quantensicheren Schlüssels auf der lokalen Ebene der Netzelemente und dessen Aufbewahrung zur späteren Verwendung vollzieht sich dabei folgender Verfahrensablauf:
a) Durch die bereits angesprochene zentrale Entropiequelle - zur Art dieser Entropiequelle sollen nähere Ausführungen später erfolgen - wird eine den Netzelementen zur lokalen Berechnung eines quantensicheren Schlüssels zur Verfügung zu stellende Zufallszahl hoher Entropie generiert. Die Erzeugung dieser Zufallszahl hoher Entropie erfolgt mit Hilfe quantenmechanischer Mittel der entsprechend ausgebildeten zentralen Entropiequelle, so dass es bei dieser um eine tatsächlich zufällige Zahl handelt. Zu jeder von ihr erzeugten Zufallszahl wird zudem durch die zentrale Entropiequelle ein die jeweilige Zufallszahl eindeutig bezeichnender Identifikator vergeben.
b) Die von der zentralen Entropiequelle mit Hilfe der quantenmechanischen Mittel generierte Zufallszahl mit dem zugehörigen Identifikator wird durch die Entropiequelle an die mit dem Pre-shared Secret ausgestatteten Netzelemente über das Netzwerk übermittelt. Hierbei ist es aufgrund der sich anschließenden Verfahrensschritte völlig unkritisch, wenn diese Zufallszahl bei ihrer Übermittlung an die Netzelemente eventuell durch einen Angreifer abgehört werden sollte. Die Zufallszahl kann somit theoretisch eigentlich auch über klassische öffentliche Kommunikationswege übertragen werden, wobei die Übertragung wie später noch ausgeführt vorsorglich dennoch zusätzlich gesichert werden sollte.
c) In den sie empfangenden Netzelementen wird die Zufallszahl hoher Entropie lokal entsprechend einer in den Netzelementen identisch angewendeten Prozessierungsvorschrift prozessiert. Unabhängig von der Art der insoweit verwendeten Prozessierungsvorschrift - zu unterschiedlichen hierfür bestehenden Möglichkeiten sollen Ausführungen später gegeben werden - wird in mittels der Zufallszahl erfolgende Berechnung, welche schließlich im Ergebnis zu dem gewünschten quantensicheren Schlüssel ebenfalls hoher Entropie führt, das Pre-shared Secret oder eine aus diesem Pre-shared Secret in identischer Weise in den Netzelementen gebildete sowie in ihrem jeweiligen HSM abgelegte Ableitung einbezogen. Der vorstehend und auch wiederholt in den Patentansprüchen (verkürzend) verwendete Begriff versteht sich dabei nicht im Sinne einer mathematischen Ableitung, also eines Differenzierens von Termen, sondern im Sinne einer Überführung des Pre-shared Secret in eine andere Form, wie beispielsweise die später noch beispielhaft angesprochene Permutationsmatrix.
d) Der gemäß c) berechnete quantensichere Schlüssel wird in Zuordnung zu dem gemeinsam mit der Zufallszahl empfangenen Identifikator im HSM eines jeweiligen Netzelements zur späteren Verwendung als gemeinsamer Schlüssel für eine symmetrische Verschlüsselung abgelegt.

An dieser Stelle sei ausdrücklich klargestellt, dass im Zuge des vorstehend angesprochenen Prozessierens der Zufallszahl der letztlich erzeugte quantensichere Schlüssel nicht zwingend direkt aus der Zufallszahl berechnet werden muss, aber in Abhängigkeit von der verwendeten Prozessierungsvorschrift berechnet werden kann. In jedem Falle erfolgt jedoch selbstverständlich die Berechnung eines jeweiligen quantensicheren Schlüssels stets sowohl unter Verwendung der dafür jeweils von der zentralen Entropiequelle zur Verfügung gestellten Zufallszahl als auch des in den Netzelementen hinterlegten Pre-shared Secret.

Grundgedanke der Erfindung ist es, die Quantensicherheit der erzeugten Schlüssel und die dafür erforderliche hohe Entropie mit Hilfe einer zentral, unter Einsatz quantenmechanischer Mittel erzeugten Zufallszahl zu gewährleisten, aber die letztlich mittels dieser erzeugten quantensicheren Schlüssel nicht über das Netzwerk zu übertragen, sondern diese erst lokal in identischer Weise unter Verwendung des Pre-shared Secret in den Netzelementen zu berechnen. Hierdurch ist es, wie bereits ausgeführt, im Grunde unbeachtlich, wenn die durch die zentrale Entropiequelle zur Verfügung gestellte Zufallszahl bei der Übertragung an die sie weiterverarbeitenden Netzelemente infolge eines Angriff abgefangen werden sollte, da sowohl das zur Berechnung des quantensicheren Schlüssels verwendete Pre-shared Secret als auch die genutzte Prozessierungsvorschrift nur lokal in den Netzelementen bekannt sind.

Die zuvor gemachten Ausführungen lassen erkennen, dass selbstverständlich einer sicheren Hinterlegung des Pre-shared Secret in den Netzelementen im Kontext der beschriebenen Lösung eine sehr große Bedeutung zukommt. So muss sichergestellt sein, dass das Pre-shared Secret, respektive das gemeinsame Geheimnis, vor seiner sicheren Ablage in dem speziell gehärteten Hardwaresicherheitsmodul (HSM) nicht Unbefugten zur Kenntnis gelangt. Auch die Sicherheit des HSM selbst muss natürlich entsprechenden Ansprüchen genügen, um ein unberechtigtes Auslesen des Pre-shared Secret sicher zu verhindern. Insoweit stellt die Nutzung der Erfindung durch Netzwerkbetreiber, respektive Provider, zur Absicherung ihrer Infrastruktur einen sehr praxisrelevanten Anwendungsfall dar. Hierbei kann dann sicherlich von der Vertrauenswürdigkeit der mit der Implementierung des erfindungsgemäßen Verfahrens in einem Netzwerk und damit mit der Implementierung des Pre-shared Secret in den HSM entsprechender Netzelemente betrauten Fachleute ausgegangen werden. Im Hinblick auf die sichere Vereitlung des Pre-shared Secret im Zuge der Implementierung in den HSMs der Netzelemente sind dabei im Wesentlichen zwei Szenarien zu unterscheiden.
- Die zentrale Entropiequelle und die Verbraucher (Netzelemente) gehören einem Anwender, wie dies im Falle eines Netzbetreibers, der seine Infrastruktur absichern will, der Fall ist. In diesem Fall kann auf vertrauenswürdige Mitarbeiter und dedizierte IT-Prozesse zurückgegriffen werden, um das Pre-shared Secret auf die Netzelemente zu verteilen. Das Verteilverfahren entspricht dem heutigen Vorgehen bei einem Austausch von Zertifikaten in Netzwerkelementen.
- Die zentrale Entropiequelle und die Verbraucher (Netzelemente) gehören mehreren Parteien. In diesem Fall müssen sich die Parteien über ein Pre-shared Secret einigen, zum Beispiel während eines persönlichen Treffens. Es obliegt dann jeder Partei, das Pre-shared Secret in Ihren Systemen zu implementieren.

Ein weiterer wesentlicher Faktor für die Sicherheit des vorgeschlagenen Verfahrens ist die Unveränderlichkeit der jeweils durch die zentrale Entropiequelle erzeugten Zufallszahl bei ihrer Übertragung an die das Verfahren nutzenden Netzelemente. Das heißt, für die Netzelemente muss die Gewähr bestehen, dass eine jeweilige Zufallszahl tatsächlich von dieser Entropiequelle kommt und nicht etwa im Wege eines Seitenangriffs eine vermeintliche Zufallszahl in das System eingebracht wird, über welche ein sie einschleusender Angreifer Kenntnis und Kontrolle hat. Liegt eine Veränderung der Zufallszahl vor, zum Beispiel durch Übertragungsfehler oder durch Angreifer, dann kommt keine sichere Übertragung zustande, da die veränderten Zufallszahlen der Entropiequelle zu unterschiedlichen Schlüsseln führen. Ein Angriff, respektive eine Veränderung der Schlüssel von der Entropiequelle kann somit detektiert werden.

In Weiterbildung des Verfahrens ist es daher vorgesehen, dass die Zufallszahl und der sie eindeutig bezeichnende Identifikator vor ihrer Übermittlung an die Netzelemente durch die zentrale Entropiequelle unter Nutzung eines PQC-Verfahrens, also eines Verfahrens der Post Quantum Cryptography, signiert werden. Hierbei werden die an die Netzelemente übermittelten Daten, welche zumindest die jeweilige Zufallszahl und den sie eindeutig bezeichnenden Identifikator umfassen, seitens der Entropiequelle mit dem privaten Schlüssel eines unter Einsatz des PQC-Verfahrens erzeugten Schlüsselpaares signiert. An dieser Stelle sei erwähnt, dass die zuvor angesprochenen, die jeweilige Zufallszahl und den Identifikator umfassenden Daten, neben der Signatur weitere Daten umfassen können, wie im Zusammenhang mit später angesprochenen Ausgestaltungsformen der Erfindung deutlich werden sollte.

Auf der Seite der die signierten Daten mit der Zufallszahl und dem Identifikator empfangenden Netzelemente kann die diesen beigefügte Signatur unter Nutzung des privaten Schlüssels des zuvor angesprochenen, nach dem PQC-Verfahrens erzeugten Schlüsselpaares auf die Authentizität des Absenders (zentrale Entropiequelle) überprüft werden. Ist das Ergebnis dieser Überprüfung positiv, so ist dies gleichzeitig ein Beleg dafür, dass die empfangenen Daten gültig, das heißt unverändert geblieben sind. Es versteht sich von selbst, dass im Zusammenhang mit der zuvor dargestellten Verfahrensgestaltung der private Schlüssel des mehrfach angesprochenen, mittels PQC erzeugten Schlüsselpaares in den - allen am Verfahren beteiligten - Netzelementen, nämlich vorzugsweise ebenfalls in deren HSM, hinterlegt werden muss.

Eine andere, sich ebenfalls der PQC bedienende Möglichkeit, die Authentizität des Absenders der Zufallszahl (Entropiequelle) und damit indirekt die Unveränderlichkeit der Daten sicherzustellen, respektive mit zugehörigem Identifikator zu belegen, besteht in einem im Zuge einer entsprechenden Konfigurierung der Netzelemente und des Systems insgesamt erfolgenden Austausch entsprechender PQC-Zertifikate. Darüber hinaus kann die PQC (Post Quantum Cryptography) dazu genutzt werden, jeweils die die Zufallszahl mit zugehörigem Identifikator umfassenden Daten vor ihrer durch die Entropiequelle erfolgenden Übermittlung an die Netzelemente zu verschlüsseln. Hierbei werden die betreffenden Daten mit dem öffentlichen Schlüssel eines unter Anwendung eines PQC-Verfahrens erzeugten Schlüsselpaares durch die Entropiequelle verschlüsselt. Ihre Entschlüsselung auf der Seite der sie empfangenen Netzelemente erfolgt dann mit dem identisch in allen Netzelementen, respektive in deren HSM, vorliegenden privaten Schlüssel dieses Schlüsselpaares. Zu den insoweit für die Signatur mittels PQC und die Verschlüsselung eventuell zu verwendenden Verfahren sollen Beispiele am Ende der Beschreibung angegeben werden.

Für die Prozessierung einer jeweiligen Zufallszahl, also die Berechnung eines jeweiligen quantensicheren Schlüssels mittels einer solchen Zufallszahl, welche lokal in den die Zufallszahl von der Entropiequelle empfangenden Netzelementen erfolgt, kommen unterschiedliche Möglichkeiten in Betracht. Ohne dass es sich hierbei um eine abschließende Aufzählung handeln soll, wird nachfolgend auf zwei dieser Möglichkeiten eingegangen.

Eine erste beispielsweise bestehende Möglichkeit der Prozessierung einer jeweiligen Zufallszahl besteht in der Verwendung einer sogenannten, bereits an früherer Stelle angesprochenen Permutationsmatrix. Es handelt sich hierbei um eine quadratische Matrix, welche sich dadurch auszeichnet, dass jede Zeile und jede Spalte dieser Matrix genau ein binäres Element mit dem Wert 1 aufweist, wohingegen alle anderen binären Elemente der jeweiligen Zeile oder Spalte gleichzeitig den Wert 0 haben. Eine solche Permutationsmatrix wird gemäß dem Verfahren als Ableitung aus den in den HSMs der Netzelemente hinterlegten Pre-shared Secret gebildet. Aus einer beliebigen Bitfolge mit einer Länge von 2048 Bit lässt sich beispielsweise mittels des Fisher Yates Algorithmus eine solche Permutationsmatrix bilden. Zum Zweck der gemäß dem vorgeschlagenen Verfahren erfolgenden Prozessierung der von der zentralen Entropiequelle eingehenden Zufallszahl, wird die betreffende Zufallszahl in jedem der sie empfangenden Netzelemente mit der identisch in allen dieser Elemente hinterlegten Permutationsmatrix multipliziert. Hierdurch entsteht ein quantensicherer Schlüssel, dessen hohe Entropie durch die mit Hilfe quantenmechanischer Mittel in der zentralen Entropiequelle generierte Zufallszahl sichergestellt wird. Darüber hinaus wird aber der endgültige, später - beispielsweise unter Anwendung des Advanced Encryption Standard - zur symmetrischen Verschlüsselung im Rahmen der Absicherung der Infrastruktur dienende quantensichere Schlüssel selbst nicht über das Netzwerk übertragen, sondern erst lokal in identischer Weise in allen Netzwerkknoten aus der Zufallszahl unter Beibehaltung von deren Entropie berechnet.

Eine andere Möglichkeit der Prozessierung einer jeweiligen Zufallszahl zur Erzeugung eines quantensicheren Schlüssels in den Netzelementen besteht darin, das Pre-shared Secret mit Hilfe einer Blockchiffre zu verschlüsseln, wobei die von der Entropiequelle empfangene Zufallszahl hierfür als Schlüssel verwendet wird. Gleichzeitig bildet der die Zufallszahl bezeichnende Identifikator oder ein Teil davon den Initialisierungsvektor für eine solche Blockchiffre aus. Bekanntlich kommt im Zusammenhang mit der Anwendung von Blockchiffren typischerweise zu Beginn der Verschlüsslung eine Initialisierung zum Einsatz, bei welcher ein Initialisierungsvektor mit dem Schlüssel XOR-verknüpft wird.

Die Berechnung eines entsprechenden quantensicheren Schlüssels mittels einer Blockchiffre kann beispielsweise unter Einsatz des AES, das heißt des Advanced Encryption Standards, erfolgen. Hierbei wird die bei einem jeweiligen Netzelement eingehende Zufallszahl als Schlüssel verwendet und unter Einsatz des AES aus dem Pre-shared Secret ein Chiffrat erzeugt, bei welchem es sich um den letztlich zu erzeugenden quantensicheren Schlüssel handelt, der in Zuordnung zu dem mit der Zufallszahl eingegangenen Identifikator in dem HSM des Netzelements abgespeichert wird. Der letztgenannte Identifikator oder ein hinsichtlich seiner Länge der für die AES-Verschlüsselung verwendeten Blocksize entsprechender Teil des Identifikators bildet hierbei den Initialisierungsvektor aus.

Selbstverständlich kommen zur Prozessierung außer AES auch noch andere Verschlüsselungsverfahren in Verfahren in Betracht, wie zum Beispiel RC4, eine XOR-Multiplikation und weitere.

Entsprechend einer Weiterbildung des erfindungsgemäßen Verfahrens kann es vorgesehen sein, dass im Zusammenhang mit der Erzeugung mehrerer quantensicherer, lokal in den Netzelementen berechneter Schlüssel wiederholt die zur Berechnung unter Verwendung der dazu jeweils von der Entropiequelle bezogenen Zufallszahl herangezogene Prozessierungsvorschrift im Hinblick wechselt, hierbei aber im Hinblick auf die beteiligten Netzelemente jeweils in identischer Weise. So können beispielsweise die gemäß Konfiguration der Netzelemente vorgesehenen Prozessierungsvorschriften zyklisch durchgewechselt werden. Noch vorteilhafter, weil aller Voraussicht nach noch sicherer, ist es, wenn durch die zentrale Entropiequelle neben der jeweiligen Zufallszahl auch noch ein zufällig wechselnder Steuercode bestimmt und den an die Netzelemente zu übertragenden Daten hinzugefügt wird. Dabei wird durch den betreffenden, durch die Netzelemente auswertbaren Steuercode festgelegt, welche Prozessierungsvorschrift auf die jeweils bei ihnen zusammen mit diesem Steuercode eingehende Zufallszahl angewendet werden soll.

Bei einem System zur Nutzung des zuvor beschriebenen Verfahrens handelt es sich um ein Netzwerk mit einer Zufallszahlen erzeugenden zentralen Entropiequelle und mit mindestens zwei über das Netzwerk mit der zentralen Entropiequelle verbundenen Netzelementen. Die mindestens zwei Netzelemente dieses Systems sind hierbei dazu ausgebildet, aus einer von ihnen über das Netzwerk von der Entropiequelle empfangenen Zufallszahl unter Einbeziehung eines gemeinsamen, in einem Hardwaresicherheitsmodul (HSM) eines jedem dieser Netzelemente implementierten Pre-shared Secret oder unter Einbeziehung einer aus diesem Pre-shared Secret in identischer Weise in den Netzelementen gebildeten sowie in ihrem jeweiligen HSM abgelegten Ableitung, gemäß einer in dem Netzelement identisch angewendeten Prozessierungsvorschrift lokal einen quantensicheren Schlüssel zu berechnen. Bei der zentralen Entropiequelle kann es sich zum Beispiel um einen QRNG, das heißt einen Quantum Random Number Generator handeln oder auch um eine von zwei untereinander durch einen Quantenkanal verbundene Netzwerkeinrichtungen, welche Zufallszahl mit einer die Quantensicherheit gewährleistenden Entropie nach einem Verfahren der Quantum Key Distribution (QKD), beispielsweise dem BB84-Protokoll, gemeinsam erzeugen und dabei untereinander austauschen/verteilen.

In einen als zentrale Entropiequelle fungierenden QRNG wäre ein entsprechender Algorithmus zur Generierung von Zufallszahlen implementiert, nämlich ein Algorithmus, welcher die zufällig generierten Quantenzustände in Zufallszahlen, das heißt mittels klassischer Computertechnik verarbeitbare Zahlen, überführt. Die von dem QRNG erzeugten Zufallszahlen können außerdem mit Hilfe eines mit dem QRNG gemeinsam angeordneten und in einer Wirkverbindung befindlichen Computers validiert werden.

Ferner kommt - insbesondere perspektivisch - der Einsatz eines Quantencomputers oder einer Kombination aus Quantencomputer und einem mit diesem gekoppelten Computer herkömmlicher Prägung in Betracht, wobei letzterer dazu dienen kann, die von dem Quantencomputer erzeugten Zufallszahlen hinsichtlich ihrer Entropie zu validieren. Zufallszahlen eines solchen Quantencomputer hätten somit eine überwachte Entropie und darüber hinaus vorzugsweise eine überwachte Authentizität.

Die Vorteile der vorgestellten Lösung lassen sich wie folgt zusammenfassen. Die Entropiequelle garantiert eine hohe Entropie hinsichtlich der von ihr generierten Zufallszahlen während der Lebensdauer der Quelle und somit eine hohe Entropie der letztlich unter Verwendung dieser Zufallszahlen lokal erzeugten quantensicheren Nutzschlüssel. Signierte Zufallszahlen, respektive Zufallszahlen und Identifikatoren erlauben einen sicheren Rückschluss auf den Zufallszahlengenerator, was wiederum die Sicherheit des Systems erhöht. Die Integration in bestehende QKD- oder PQC-Architekturen ist transparent und minimal invasiv, die vorgestellte Lösung lässt daher einfach in bestehende Einrichtungen oder Systeme, die mittels ihrer gesichert werden sollen, integrieren.

Eine zusätzliche PQC Verschlüsselung der von der Entropiequelle zu den Netzwerkknoten versendeten Zufallszahlen erhöht Sicherheit des Verfahrens beträchtlich. Hierdurch wird eine, einem potentiellen Angreifer unkenntliche, Zufallszahl durch ein unbekanntes mathematisches Verfahren basierend auf einer unbekannten lokalen Zufallszahl (Pre-shared Secret) lokal verändert und in einem HSM abgespeichert. Eine unbekannte Zufallszahl (weil PQC-verschlüsselt) in unbekannter Weise verändert (basierend auf unbekanntem Pre-Shared Secret und einem unbekanntem Verfahren) führt letztlich gewissermaßen zu einem höchst unbekannten quantensicheren Schlüssel. Der potenzielle Angreifer erhält maximal Zugriff auf die AES Chiffre, also die mittels dieses quantensicheren (Nutz-) Schlüssels verschlüsselten Nutzdaten im Netzwerk. Wird außerdem insbesondere der AES Schlüssel alle 1 TBit gewechselt, ist das Verfahren als quantensicher anzusehen.

Das dargestellte Verfahren verteilt private Schlüssel in distribuierten Netzwerkumgebungen, ohne diese geheimen Schlüssel selbst auszutauschen und ihn damit für potenzielle Angreifer offenzulegen. Der Schlüssel, der die Netzwerkverkehre und/oder Anwendungen schützt, wird lokal im Netzwerkknoten erzeugt, verarbeitet und gespeichert. Der eingesetzte finale Schlüssel wird nicht mehr durch ungesicherte Netze transferiert. Aus diesem Grund sind Technologien, wie Quantenschlüsselaustausch, im Grunde nicht mehr notwendig.

Über die synchrone Veränderung der Zufallszahlen mittels eines mathematischen Verfahrens werden in allen Netzelementen private Anwendungsschlüssel (Nutzschlüssel) lokal erzeugt. Die Sicherheit des Verfahrens ist somit nun nicht mehr von der Sicherheit der für einen Austausch von Schlüsseln über das Netzwerk gewählten PQC Verschlüsselung zwischen Quantenzufallszahlengeneratoren (QRNG) und Netzwerkknoten, respektive Netzelementen abhängig.

Ein großer Vorteil der vorgestellten Lösung gegenüber von QKD-Systemen ist zudem die wegfallenden Längenbegrenzung. auf ca. 100 km. Damit können Intercity-Netze, nationale Netze, internationale Netze, interkontinentale Netze, globale Netze, terrestrische Netze oder auch sogar außerterrestrische Netze kosteneffizient aufgebaut werden. Darüber hinaus verringern sich die Kosten gegenüber dem Einsatz von QKD-Systemen beträchtlich. Sie betragen demgegenüber nur einen Bruchteil. QKD-Systeme kämen dann nur noch insoweit zum Einsatz, als sie vielleicht ohnehin schon bestehen und wie beispielhaft angegeben beispielweise Netzwerkknoten eines bereits bestehenden QKD-Verbundes als zentrale Entropiequelle genutzt werden können.

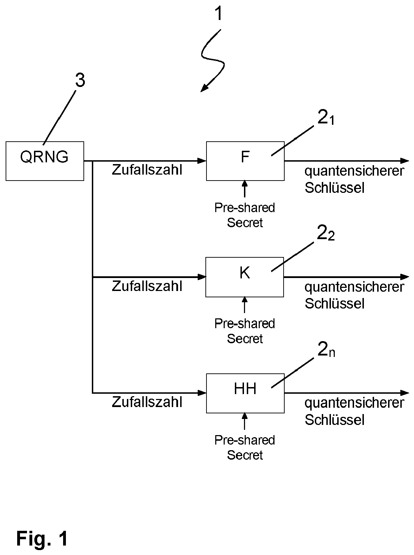

Ein Beispiel für ein erfindungsgemäßes System ist in der Fig. 1 in einer stark schematisierten Darstellung gezeigt. Gemäß dem gezeigten Beispiel sind eine zentrale Entropiequelle 3 und drei Netzelemente 2₁, 2₂, ... 2ₙ - hier beispielsweise in drei unterschiedlichen Städten (Frankfurt - F, Köln - K, Hamburg - HH) angeordnete Netzwerkknoten - gemeinsam in einem Weitverkehrsnetz (Netzwerk 1) angeordnet. Bei der zentralen Entropiequelle 3, welche zur Erzeugung von Zufallszahlen hoher Entropie vorgesehen ist, handelt es sich beispielsweise um einen QRNG. Alle Netzwerkknoten (Netzelemente 2₁, 2₂, ... 2ₙ) sind, um ihnen die Anwendung des erfindungsgemäßen Verfahrens zu ermöglichen, mit einem in ihrem gemeinsamen Besitz befindlichen, in einem jeweiligen Netzwercknoten 2₁, 2₂, ... 2ₙ in einem HSM angeordneten, Pre-shared Secret ausgestattet.

Durch die zentrale Entropiequelle 3 werden fortwährend zumindest Zufallszahlen generiert und diesen jeweils ein sie eindeutig bezeichnender Identifikator zugeordnet. Die jeweilige Zufallszahl mit dem zugehörigen Identifikator wird über das Netzwerk 1 (Weitverkehrsnetz) an die mit dem identischen Pre-shared Secret ausgestatteten Netzelemente 2₁, 2₂, ... 2ₙ übermittelt. Dort wird die empfangene Zufallszahl gemäß dem beschriebenen Verfahren, beispielsweise durch Multiplikation mit einer aus dem Pre-shared Secret abgeleiteten Permutationsmatrix, prozessiert und somit jeweils lokal ein identischer quantensicherer Schlüssel erzeugt und in Zuordnung zu dem mit der Zufallszahl empfangenen Identifikator zur späteren Verwendung in dem (nicht gezeigten) HSM abgelegt.

Zur Sicherung einer beispielsweise zur Übertragung die Infrastruktur betreffender Steuerdaten dienenden Kommunikation eines der Netzelemente 2₁, 2₂, ... 2ₙ mit einem anderen Netzelement 2₁, 2₂, ... 2ₙ übermittelt das erstgenannte Netzelement 2₁, 2₂, ... 2ₙ den Identifikator eines von ihm zur symmetrischen Verschlüsslung der Daten aus seinem HSM verwendeten quantensicheren Schlüssels an das andere Netzelement 2₁, 2₂, ... 2ₙ. Unter Verwendung dieses Identifikators und des zugehörigen, bei ihm ebenfalls abgelegten quantensicheren Schlüssels kann das die Daten empfangende Netzelement 2₁, 2₂, ... 2ₙ diese Daten entschlüsseln.

Wie zuvor bereits ausgeführt, werden die Zufallszahl und der zugehörige sie bezeichnende Identifikator zu Sicherstellung ihrer Unveränderlichkeit, respektive zur Sicherstellung der Authentizität der sie an die Netzelemente 2₁, 2₂, ... 2ₙ übertragenden zentralen Entropiequelle 3 vorzugsweise unter Nutzung eines PQC-Verfahrens, das heißt eines Verfahrens der Post Quantum Cryptography, signiert und gegebenenfalls außerdem, ebenfalls unter Anwendung eines PQC-Verfahrens verschlüsselt. Nachfolgend seien beispielhaft hierfür verwendbare Verfahren angegeben.

Nachfolgend sollen Beispiele für im Zusammenhang mit der Erfindung nutzbare PQC-Signatur und -Verschlüsselungsverfahren gegeben werden.

Verfügbare Post Quantum Signaturverfahren:
'DILITHIUM_2', 'DILITHIUM_3', 'DILITHIUM_4', 'MQDSS-31-48', MQDSS-31-64', SPHINCS+-Haraka-128f-robust', SPHINCS+-Haraka-128f-simple', 'SPHINCS+-Haraka-128s-robust', 'SPHINCS+-Haraka-128s-simple', 'SPHINCS+-Haraka-192f-robust', 'SPHINCS+-Haraka-192f-simple', 'SPHINCS+-Haraka-192s-robust', 'SPHINCS+-Haraka-192s-simple', 'SPHINCS+-Haraka-256f-robust', 'SPHINCS+-Haraka-256f-simple', 'SPHINCS+-Haraka-256s-robust', 'SPHINCS+-Haraka-256s-simple', 'SPHINCS+-SHA256-128f-robust', ,SPHINCS+-SHA256-128f-simple', 'SPHINCS+-SHA256-128s-robust', 'SPHINCS+-SHA256-128s-simple', 'SPHINCS+-SHA256-192f-robust', 'SPHINCS+-SHA256-192f-simple', 'SPHINCS+-SHA256-192s-robust', 'SPHINCS+-SHA256-192s-simple', 'SPHINCS+-SHA256-256f-robust', 'SPHINCS+-SHA256-256f-simple', 'SPHINCS+-SHA256-256s-robust', 'SPHINCS+-SHA256-256s-simple', 'SPHINCS+-SHAKE256-128f-robust', 'SPHINCS+-SHAKE256-128f-simple', 'SPHINCS+-SHAKE256-128s-robust', 'SPHINCS+-SHAKE256-128s-simple', 'SPHINCS+-SHAKE256-192f-robust', 'SPHINCS+-SHAKE256-192f-simple', 'SPHINCS+-SHAKE256-192s-robust', 'SPHINCS+-SHAKE256-192s-simple', 'SPHINCS+-SHAKE256-256f-robust', 'SPHINCS+-SHAKE256-256f-simple', 'SPHINCS+-SHAKE256-256s-robust', 'SPHINCS+-SHAKE256-256s-simple', m 'picnic_L1_FS', 'picnic_L1_UR', 'picnic_L3_FS', 'picnic_L3_UR', 'picnic_L5_FS', 'picnic_L5_UR', 'picnic2_L1_FS', 'picnic2_L3_FS', 'picnic2_L5_FS', 'qTesla-p-I', 'qTesla-p-III'

### Verfügbare Post Quantum Verschlüsselungsverfahren

'BIKE1-L1-CPA', 'BIKE1-L3-CPA', 'BIKE1-L1-FO', 'BIKE1-L3-FO', 'Kyber512', 'Kyber768', 'Kyber1024', 'Kyber512-90s', 'Kyber768-90s', 'Kyber1024-90s', 'LEDAcryptKEM-LT12', 'LEDAcryptKEM-LT32', 'LEDAcryptKEM-LT52', 'NewHope-512-CCA', 'NewHope-1024-CCA', 'NTRU-HPS-2048-509', 'NTRU-HPS-2048-677', 'NTRU-HPS-4096-821', 'NTRU-HRSS-701', 'LightSaber-KEM', 'Saber-KEM', 'FireSaber-KEM', 'BabyBear', 'BabyBearEphem', 'MamaBear', 'MamaBearEphem', 'PapaBear', 'PapaBearEphem', ,FrodoKEM-640-AES', 'Fro-doKEM-640-SHAKE', 'FrodoKEM-976-AES', 'FrodoKEM-976-SHAKE', 'Fro-doKEM-1344-AES', 'FrodoKEM-1344-SHAKE', 'SIDH-p434', 'SIDH-p503', 'SIDH-p610', ,SIDH-p751', 'SIDH-p434-compressed', 'SIDH-p503-compressed', 'SIDH-p610-compressed', 'SIDH-p751-compressed', 'SIKE-p434', 'SIKE-p503', 'SIKE-p610', 'SIKE-p751', 'SIKE-p434-compressed', 'SIKE-p503-compressed', 'SIKE-p610-compressed', 'SIKE-p751-compressed'.

Das vorstehend beispielhaft genannten Verfahren nutzen die Standards und Prinzipien, die in den jeweiligen nationalen und internationalen Standardisierungsgremien erarbeitet werden. Diese sind:
- National Standardization (NIST, IEEE)
- European Standardization (ETSI ISG QKD, ETSI TC Cyber WG QSC)
- International Standardization (ISO /IEC, ITU, Quantum Internet Proposed Research Group, Crypto Forum Focus Group)

## Patentansprüche

1. Verfahren zur Erzeugung quantensicherer Schlüssel in einem Netzwerk (1), welche zur Sicherung der zwischen mindestens zwei, selbst nicht über quantenmechanische Mittel verfügenden Netzelementen (2₁, 2₂, ... 2ₙ) in dem Netzwerk (1) erfolgenden Kommunikation verwendet werden, wobei ein jeweiliger quantensicherer Schlüssel lokal durch jedes der mindestens zwei Netzelemente (2₁, 2₂, ... 2ₙ) und unter Verwendung eines Pre-shared Secret, nämlich eines jeweils in einem Hardware-Sicherheitsmodul HSM der Netzelemente (2₁, 2₂, ... 2ₙ) implementierten gemeinsamen Geheimnisses, mittels einer den Netzelementen (2₁, 2₂, ... 2ₙ) dafür zur Verfügung gestellten Zufallszahl hoher Entropie berechnet wird, wobei das Verfahren die Schritte umfasst
a.) Erzeugen einer den Netzelementen (2₁, 2₂, ... 2ₙ) zur lokalen Berechnung eines quantensicheren Schlüssels zur Verfügung zu stellenden Zufallszahl hoher Entropie durch eine zentrale Entropiequelle (3), welche die Zufallszahl mithilfe quantentechnischer Mittel generiert und einen die Zufallszahl eindeutig bezeichnenden Identifikator vergibt,
b.) Übermitteln der Zufallszahl mit zugehörigem Identifikator durch die zentrale Entropiequelle (3) an die mit dem Pre-shared Secret ausgestatteten Netzelemente (2₁, 2₂, ... 2ₙ) über das Netzwerk (1),
c.) Prozessieren der Zufallszahl lokal in den sie empfangenden Netzelementen (2₁, 2₂, ... 2ₙ) unter Einbeziehung des Pre-shared Secret oder einer daraus in identischer Weise in den Netzelementen (2₁, 2₂, ... 2ₙ) gebildeten sowie in ihrem jeweiligen HSM zuvor abgelegten Ableitung und gemäß einer in den Netzelementen (2₁, 2₂, ... 2ₙ) identisch angewendeten Prozessierungsvorschrift,
d.) Ablage des gemäß Schritt c) berechneten quantensicheren Schlüssels in Zuordnung zu dem gemeinsam mit der Zufallszahl empfangenen Identifikator im HSM eines jeweiligen Netzelementes (2₁, 2₂, ... 2ₙ) zur späteren Verwendung als gemeinsamer Schlüssel für eine symmetrische Verschlüsselung.

2. Verfahren nach Anspruch 1, **dadurch gekennzeichnet, dass** die Zufallszahl und der sie eindeutig bezeichnende Identifikator vor ihrer Übermittlung an die Netzelemente (2₁, 2₂, ... 2ₙ) durch die zentrale Entropiequelle (3) unter Verwendung eines privaten Schlüssels eines nach einem PQC-Verfahren, das heißt nach einem Verfahren der Post Quantum Cryptography, erzeugten Schlüsselpaares signiert werden, um den sie empfangenden Netzelementen (2₁, 2₂, ... 2ₙ) eine Überprüfung der Authentizität der empfangenen Daten im Hinblick auf deren Herkunft von der zentralen Entropiequelle (3) mittels des zuvor an die Netzelemente (2₁, 2₂, ... 2ₙ) übermittelten öffentlichen Schlüssels des nach dem PQC-Verfahren erzeugten Schlüsselpaars zu ermöglichen und somit deren Unveränderlichkeit zu gewährleisten.

3. Verfahren nach Anspruch 1, **dadurch gekennzeichnet, dass** sich die zentrale Entropiequelle (3) bei der Aussendung der Zufallszahl und des die Zufallszahl eindeutig bezeichnenden Identifikators gegenüber den Netzelementen (2₁, 2₂, ... 2ₙ) mittels eines zuvor zwischen ihr und den Netzelementen (2₁, 2₂, ... 2ₙ) ausgetauschten, nach einem PQC-Verfahren erzeugten Zertifikats authentifiziert.

4. Verfahren nach einem der Ansprüche 1 bis 3, **dadurch gekennzeichnet, dass** die zumindest die Zufallszahl und den sie bezeichnenden Identifikator enthaltenden Daten durch die zentrale Entropiequelle (3) bei ihrer Übertragung an die Netzelemente (2₁, 2₂, ... 2ₙ) nach einem PQC-Verfahren verschlüsselt werden, nämlich mittels eines der zentralen Entropiequelle (3) zur Verfügung gestellten öffentlichen Schlüssels eines Schlüsselpaares, dessen privater Schlüssel bei den Netzelementen (2₁, 2₂, ... 2ₙ) als gemeinsamer Schlüssel hinterlegt ist und von ihnen nach dem Empfang der durch die Entropiequelle (3) übertragenen, die Zufallszahl und den Identifikator enthaltenden Daten zu deren Entschlüsselung verwendet wird, an welche sich die Prozessierung der durch diesen Entschlüsselungsvorgang aus dem Chiffrat gewonnenen Zufallszahl anschließt.

5. Verfahren nach einem der Ansprüche 1 bis 4, **dadurch gekennzeichnet, dass** in den Netzelementen (2₁, 2₂, ... 2ₙ) als Ableitung aus dem Pre-shared Secret in jeweils identischer Weise eine Permutationsmatrix erzeugt und in dem HSM abgelegt wird, welche bei der Berechnung eines jeweiligen quantensicheren Schlüssels zur Prozessierung der dazu von der zentralen Entropiequelle (3) empfangenen Zufallszahl mit dieser Zufallszahl multipliziert wird.

6. Verfahren nach einem der Ansprüche 1 bis 4, **dadurch gekennzeichnet, dass** die von der zentralen Entropiequelle (3) empfange Zufallszahl in den Netzelementen (2₁, 2₂, ... 2ₙ) prozessiert wird, indem sie als Schlüssel für eine auf das Pre-shared-Secret angewendete, als Chiffrat den quantensicheren Schlüssel erzeugende Blockchiffre verwendet wird, für welche der die Zufallszahl bezeichnende Identifikator oder ein Teil davon einen Initialisierungsvektor ausbildet.

7. Verfahren nach Anspruch 6, **dadurch gekennzeichnet, dass** die von der zentralen Entropiequelle (3) empfangene Zufallszahl als Schlüssel zur Anwendung des AES, das heißt des Advanced Encryption Standards, auf das Pre-shared Secret verwendet wird, wobei ein, hinsichtlich seiner Länge, der bei der Durchführung der AES-Verschlüsselung verwendeten Block Size entsprechender Teil des Identifikators der Zufallszahl als Initialisierungsvektor verwendet wird.

8. Verfahren nach einem der Ansprüche 1 bis 7, **dadurch gekennzeichnet, dass** bei der Erzeugung mehrerer quantensicherer, lokal in den Netzelementen (2₁, 2₂, ... 2ₙ) berechneter Schlüssel wiederholt in für alle Netzelemente (2₁, 2₂, ... 2ₙ) gleicher Weise die Prozessierungsvorschrift wechselt, welche zur Berechnung eines jeweiligen Schlüssels auf die jeweils von der zentralen Entropiequelle (3) eingehende Zufallszahl angewendet wird.

9. Verfahren nach Anspruch 8, **dadurch gekennzeichnet, dass** die auf eine jeweilige Zufallszahl anzuwendende Prozessierungsvorschrift durch einen zufällig wechselnden Steuercode bestimmt wird, welcher jeweils durch die zentrale Entropiequelle (3) bestimmt und gemeinsam mit der Zufallszahl und deren Identifikator an die diesen zufälligen Steuercode zur Auswahl der jeweils zu verwendenden Prozessierungsvorschrift auswertenden Netzelemente (2₁, 2₂, ... 2ₙ) übertragen wird.

10. System, nämlich Netzwerk (1) mit einer Zufallszahlen erzeugenden zentralen Entropiequelle (3) und mit mindestens zwei über das Netzwerk (1) untereinander und mit der zentralen Entropiequelle (3) verbundenen Netzelementen (2₁, 2₂, ... 2ₙ), wobei die mindestens zwei Netzelemente (2₁, 2₂, ... 2ₙ) dazu ausgebildet sind, aus eine von ihnen über das Netzwerk (1) empfangenen Zufallszahl, nämlich aus jeweils derselben durch die Entropiequelle (3) an sie übermittelten Zufallszahl, unter Einbeziehung eines gemeinsamen, in jedem dieser Netzelemente (2₁, 2₂, ... 2ₙ) in einem Hardware-Sicherheitsmodul HSM implementierten Pre-shared Secret oder unter Einbeziehung einer aus diesem Pre-shared Secret in identischer Weise in den Netzelementen (2₁, 2₂, ... 2ₙ) gebildeten sowie in ihrem jeweiligen HSM abgelegten Ableitung, gemäß einer in den Netzelementen (2₁, 2₂, ... 2ₙ) identisch angewendeten Prozessierungsvorschrift, lokal einen quantensicheren Schlüssel zu berechnen.

11. System nach Anspruch 10, **dadurch gekennzeichnet, dass** es sich bei der zentralen Entropiequelle (3) um einen Quantum Random Number Generator QRNG, das heißt um einen Zufallszahlengenerator, handelt, bei welchem ein Algorithmus zur Erzeugung von Zufallszahlen aus generierten quantenmechanischen Zuständen implementiert ist.

12. System nach Anspruch 10, **dadurch gekennzeichnet, dass** es sich bei der zentralen Entropiequelle (3) um einen Quantencomputer mit überwachter Entropie und überwachter Authentizität handelt.

13. System nach Anspruch 10, **dadurch gekennzeichnet, dass** es sich bei der zentralen Entropiequelle (3) um einen QKD-Verbund, nämlich um zwei mit quantenmechanischen Mitteln zur Ausführung eines Verfahrens der Quantum Key Distribution ausgestattete und über einen Quantenkanal miteinander verbundene Netzwerkeinrichtungen, handelt.

## Claims

1. Method for generating quantum-safe keys in a network (1) which are used for safeguarding the communication taking place between at least two network elements (2₁, 2₂, ... 2ₙ) in the network (1), said network elements themselves not having quantum mechanical means, wherein a respective quantum-safe key is calculated locally by each of the at least two network elements (2₁, 2₂, ... 2ₙ) and using a pre-shared secret, namely a shared secret implemented in each case in a hardware security module HSM of the network elements (2₁, 2₂, ... 2ₙ), by means of a high-entropy random number made available to the network elements (2₁, 2₂, ... 2ₙ) for this purpose, wherein the method comprises the steps of
a.) generating a high-entropy random number to be made available to the network elements (2₁, 2₂, ... 2ₙ) for locally calculating a quantum-safe key by way of a central entropy source (3), which generates the random number with the aid of quantum technical means and allocates an identifier uniquely designating the random number,
b.) communicating the random number with associated identifier by way of the central entropy source (3) to the network elements (2₁, 2₂, ... 2ₙ) equipped with the pre-shared secret via the network (1),
c.) processing the random number locally in the network elements (2₁, 2₂, ... 2ₙ) that receive it with the inclusion of the pre-shared secret or a derivation formed therefrom in an identical manner in the network elements (2₁, 2₂, ... 2ₙ) and stored previously in their respective HSM, and in accordance with a processing specification applied identically in the network elements (2₁, 2₂, ... 2ₙ),
d.) storing the quantum-safe key calculated in accordance with step c), with assignment to the identifier received jointly with the random number, in the HSM of a respective network element (2₁, 2₂, ... 2ₙ) for later use as a shared key for a symmetric encryption.

2. Method according to Claim 1, **characterized in that** the random number and the identifier uniquely designating it are signed before being communicated to the network elements (2₁, 2₂, ... 2ₙ) by way of the central entropy source (3) using a private key of a key pair generated according to a PQC method, that is to say according to a post-quantum cryptography method, in order to enable the network elements (2₁, 2₂, ... 2ₙ) that receive them to check the authenticity of the received data with regard to their origin from the central entropy source (3) by means of the public key of the key pair generated according to the PQC method, said public key having being communicated to the network elements (2₁, 2₂, ... 2ₙ) beforehand, and thus to ensure their invariability.

3. Method according to Claim 1, **characterized in that** the central entropy source (3), when sending the random number and the identifier uniquely designating the random number, authenticates itself vis-à-vis the network elements (2₁, 2₂, ... 2ₙ) by means of a certificate generated according to a PQC method, said certificate having been exchanged between the central entropy source and the network elements (2₁, 2₂, ... 2ₙ) beforehand.

4. Method according to any of Claims 1 to 3, **characterized in that** the data containing at least the random number and the identifier designating it are encrypted by the central entropy source (3) upon their transmission to the network elements (2₁, 2₂, ... 2ₙ) according to a PQC method, namely by means of a public key of a key pair, said public key having been made available to the central entropy source (3), the private key of which key pair has been stored as a shared key at the network elements (2₁, 2₂, ... 2ₙ) and is used by the latter, after the reception of the data transmitted by the entropy source (3) and containing the random number and the identifier, for the decryption of said data, which is followed by the processing of the random number obtained from the ciphertext by way of this decryption process.

5. Method according to any of Claims 1 to 4, **characterized in that** in the network elements (2₁, 2₂, ... 2ₙ), in an identical manner in each case, a permutation matrix is generated as derivation from the pre-shared secret and is stored in the HSM, which permutation matrix, during the calculation of a respective quantum-safe key for the purpose of processing the random number received for this purpose from the central entropy source (3), is multiplied by this random number.

6. Method according to any of Claims 1 to 4, **characterized in that** the random number received from the central entropy source (3) is processed in the network elements (2₁, 2₂, ... 2ₙ) by virtue of its being used as a key for a block cipher which is applied to the pre-shared secret and which generates the quantum-safe key as ciphertext and for which the identifier designating the random number or a part of said identifier forms an initialization vector.

7. Method according to Claim 6, **characterized in that** the random number received from the central entropy source (3) is used as a key for applying the AES, that is to say the Advanced Encryption Standard, to the pre-shared secret, wherein a part of the identifier of the random number, said part corresponding in regard to its length to the block size used in carrying out the AES encryption, is used as an initialization vector.

8. Method according to any of Claims 1 to 7, **characterized in that** when generating a plurality of quantum-safe keys calculated locally in the network elements (2₁, 2₂, ... 2ₙ), the processing specification applied to the random number respectively arriving from the central entropy source (3) for the purpose of calculating a respective key changes repeatedly in a manner that is identical for all the network elements (2₁, 2₂, ... 2ₙ).

9. Method according to Claim 8, **characterized in that** the processing specification to be applied to a respective random number is determined by a randomly changing control code which in each case is determined by the central entropy source (3) and transmitted jointly with the random number and the identifier thereof to the network elements (2₁, 2₂, ... 2ₙ) that evaluate this random control code for the purpose of selecting the processing specification to be used in each case.

10. System, namely network (1) comprising a central entropy source (3) that generates random numbers, and comprising at least two network elements (2₁, 2₂, ... 2ₙ) which are connected to the central entropy source (3) and among one another via the network (1), wherein the at least two network elements (2₁, 2₂, ... 2ₙ) are designed to locally calculate a quantum-safe key from a random number received by them via the network (1), namely from in each case the same random number communicated to them by the entropy source (3), with the inclusion of a common pre-shared secret implemented in a hardware security module HSM in each of these network elements (2₁, 2₂, ... 2ₙ), or with the inclusion of a derivation formed from this pre-shared secret in an identical manner in the network elements (2₁, 2₂, ... 2ₙ) and stored in their respective HSM, in accordance with a processing specification applied identically in the network elements (2₁, 2₂, ... 2ₙ).

11. System according to Claim 10, **characterized in that** the central entropy source (3) is a quantum random number generator QRNG, that is to say a random number generator in which an algorithm for generating random numbers from generated quantum mechanical states is implemented.

12. System according to Claim 10, **characterized in that** the central entropy source (3) is a quantum computer with monitored entropy and monitored authenticity.

13. System according to Claim 10, **characterized in that** the central entropy source (3) is a QKD group, namely two network devices which are equipped with quantum mechanical means for performing a method of quantum key distribution and are connected to one another via a quantum channel.

## Revendications

1. Procédé de génération de clés quantiques sûres dans un réseau (1), qui sont utilisées pour sécuriser la communication s'effectuant dans le réseau (1) entre au moins deux éléments de réseau (2₁, 2₂, ... 2ₙ) ne disposant pas eux-mêmes de moyens à mécanique quantique, dans lequel une clé quantique sûre respective est calculée localement par chacun des au moins deux éléments de réseau (2₁, 2₂, ... 2ₙ) et en utilisant un secret pré-partagé, à savoir un secret commun respectivement mis en œuvre dans un module de sécurité matériel HSM des éléments de réseau (2₁, 2₂, ... 2ₙ), au moyen d'un nombre aléatoire à entropie élevée fourni à cet effet aux éléments de réseau (2₁, 2₂, ... 2ₙ), dans lequel le procédé comprend les étapes consistant à :
a.) génération d'un nombre aléatoire à entropie élevée devant être fourni aux éléments de réseau (2₁, 2₂, ... 2ₙ) pour le calcul local d'une clé quantique sûre par une source d'entropie centrale (3) qui génère le nombre aléatoire à l'aide de moyens à mécanique quantique et attribue un identificateur désignant de manière univoque le nombre aléatoire,
b.) transmission du nombre aléatoire avec l'identificateur correspondant par la source d'entropie centrale (3) aux éléments de réseau (2₁, 2₂, ... 2ₙ) dotés du secret pré-partagé par l'intermédiaire du réseau (1),
c.) traitement local du nombre aléatoire dans les éléments de réseau (2₁, 2₂, ... 2ₙ) qui le reçoivent, en incluant le secret pré-partagé ou une dérivée de celui-ci, calculée de manière identique dans les éléments de réseau (2₁, 2₂, ... 2ₙ) et préalablement stockée dans leur HSM respectif, et selon une règle de traitement appliquée de manière identique dans les éléments de réseau (2₁, 2₂, ... 2ₙ),
d.) stockage de la clé quantique sûre calculée selon l'étape c) en association avec l'identificateur reçu en commun avec le nombre aléatoire dans le HSM d'un élément de réseau (2₁, 2₂, ... 2ₙ) respectif en vue d'une utilisation ultérieure en tant que clé commune pour un cryptage symétrique.

2. Procédé selon la revendication 1, **caractérisé en ce que** le nombre aléatoire et l'identificateur le désignant de manière univoque sont signés, avant leur transmission aux éléments de réseau (2₁, 2₂, ... 2ₙ), par la source d'entropie centrale (3) en utilisant une clé privée d'une paire de clés générée selon un procédé PQC, c'est-à-dire selon un procédé de Cryptographie Post-Quantique, pour permettre aux éléments de réseau (2₁, 2₂, ... 2ₙ) qui les reçoivent de vérifier l'authenticité des données reçues en ce qui concerne leur provenance de la source d'entropie centrale (3) au moyen de la clé publique de la paire de clés générée selon le procédé PQC et préalablement transmise aux éléments de réseau (2₁, 2₂, ... 2ₙ), et de garantir ainsi leur invariance.

3. Procédé selon la revendication 1, **caractérisé en ce que**, lors de l'envoi du nombre aléatoire et de l'identificateur désignant de manière univoque le nombre aléatoire, la source d'entropie centrale (3) s'authentifie vis-à-vis des éléments de réseau (2₁, 2₂, ... 2ₙ) au moyen d'un certificat préalablement échangé entre elle et les éléments de réseau (2₁, 2₂, ... 2ₙ) et généré selon un procédé PQC.

4. Procédé selon l'une des revendications 1 à 3, **caractérisé en ce que** les données contenant au moins le nombre aléatoire et l'identificateur qui le désigne sont cryptées par la source d'entropie centrale (3) lors de leur transmission aux éléments de réseau (2₁, 2₂, ... 2ₙ) selon un procédé PQC, à savoir au moyen d'une clé publique, fournie à la source d'entropie centrale (3), d'une paire de clés dont la clé privée est stockée dans les éléments de réseau (2₁, 2₂, ... 2ₙ) en tant que clé commune et est utilisée par ceux-ci, après réception des données transmises par la source d'entropie (3) et contenant le nombre aléatoire et l'identificateur, pour leur déchiffrement, auquel fait suite le traitement du nombre aléatoire obtenu à partir des données chiffrées par ce processus de déchiffrement.

5. Procédé selon l'une des revendications 1 à 4, **caractérisé en ce que**, dans les éléments de réseau (2₁, 2₂, ... 2ₙ), une matrice de permutation est générée de manière respectivement identique en tant que dérivée du secret pré-partagé et est stockée dans le HSM, laquelle matrice est multipliée par ledit nombre aléatoire lors du calcul d'une clé quantique sûre respective pour le traitement du nombre aléatoire reçu à cet effet en provenance de la source d'entropie centrale (3).

6. Procédé selon l'une des revendications 1 à 4, **caractérisé en ce que** le nombre aléatoire reçu par la source d'entropie centrale (3) est traité dans les éléments de réseau (2₁, 2₂, ... 2ₙ) en l'utilisant en tant que clé pour un chiffrement par bloc appliqué au secret pré-partagé et générant en tant que données chiffrées la clé quantique sûre, pour laquelle l'identificateur désignant le nombre aléatoire ou une partie de celui-ci constitue un vecteur d'initialisation.

7. Procédé selon la revendication 6, **caractérisé en ce que** le nombre aléatoire reçu en provenance de la source d'entropie centrale (3) est utilisé en tant que clé pour appliquer l'AES, c'est-à-dire la norme Advanced Encryption Standard, au secret pré-partagé, dans lequel une partie de l'identificateur du nombre aléatoire correspondant, du point de vue de sa longueur, à la taille de bloc utilisée lors de l'exécution du cryptage AES est utilisée en tant que vecteur d'initialisation.

8. Procédé selon l'une des revendications 1 à 7, **caractérisé en ce que**, lors de la génération de plusieurs clés quantiques sûres, calculées localement dans les éléments de réseau (2₁, 2₂, ... 2ₙ), la règle de traitement, qui est appliquée, pour le calcul d'une clé respective, au nombre aléatoire provenant respectivement de la source d'entropie centrale (3), change de manière répétée de manière identique pour tous les éléments de réseau (2₁, 2₂, ... 2ₙ).

9. Procédé selon la revendication 8, **caractérisé en ce que** la règle de traitement devant être appliquée à un nombre aléatoire respectif est déterminée par un code de commande changeant aléatoirement, qui est respectivement déterminé par la source d'entropie centrale (3) et qui est transmis en commun avec le nombre aléatoire et son identificateur aux éléments de réseau (2₁, 2₂, ... 2ₙ) évaluant ledit code de commande aléatoire pour sélectionner la règle de traitement devant être respectivement utilisée.

10. Système, à savoir réseau (1) comportant une source d'entropie centrale (3) générant des nombres aléatoires et au moins deux éléments de réseau (2₁, 2₂, ... 2ₙ) reliés entre eux et à la source d'entropie centrale (3) par l'intermédiaire du réseau (1), dans lequel les au moins deux éléments de réseau (2₁, 2₂, ... 2ₙ) sont conçus pour calculer localement une clé quantique sûre à partir d'un nombre aléatoire qu'ils reçoivent par l'intermédiaire du réseau (1), à savoir respectivement à partir du même nombre aléatoire qui leur est transmis par la source d'entropie (3), en tenant compte d'un code de sécurité commun qui est mis en œuvre dans chacun desdits éléments de réseau (2₁, 2₂, ... 2ₙ) dans un module de sécurité matériel HSM ou en tenant compte d'une dérivée calculée de manière identique à partir dudit secret pré-partagé dans les éléments de réseau (2₁, 2₂, ... 2ₙ) et stockée dans leur HSM respectif, selon une règle de traitement appliquée de manière identique dans les éléments de réseau (2₁, 2₂, ... 2ₙ).

11. Système selon la revendication 10, **caractérisé en ce que** la source d'entropie centrale (3) est un Générateur de Nombre Aléatoire Quantique, QRNG, c'est-à-dire un générateur de nombre aléatoire dans lequel un algorithme est mis en œuvre pour générer des nombres aléatoires à partir d'états de mécanique quantique générés.

12. Système selon la revendication 10, **caractérisé en ce que** la source d'entropie centrale (3) est un ordinateur quantique à entropie surveillée et à authenticité surveillée.

13. Système selon la revendication 10, **caractérisé en ce que** la source d'entropie centrale (3) est une liaison QKD, à savoir deux dispositifs de réseau dotés de moyens à mécanique quantique destinés à mettre en œuvre un procédé de distribution de clés quantiques et reliés entre eux par l'intermédiaire d'un canal quantique.
